Europäisches Patentamt

European Patent Office

Office européen des brevets

(19)

(11) Publication number: **0 067 603**
**B1**

(12) **EUROPEAN PATENT SPECIFICATION**

(45) Date of publication of patent specification: **21.11.85**

(51) Int. Cl.⁴: **B 01 F 7/08,** B 29 B 7/18

(21) Application number: **82302789.1**

(22) Date of filing: **28.05.82**

(54) **Mixers.**

(30) Priority: **03.06.81 GB 8116978**

(43) Date of publication of application:
**22.12.82 Bulletin 82/51**

(45) Publication of the grant of the patent:
**21.11.85 Bulletin 85/47**

(84) Designated Contracting States:
**DE FR IT**

(56) References cited:
**DE-A-1 557 218**
**DE-U-1 929 749**
**GB-A-1 039 758**
**GB-A-1 126 063**
**US-A-2 749 571**
**US-A-3 118 175**
**US-A-3 558 106**
**US-A-3 704 866**
**US-A-4 053 144**

(73) Proprietor: **USM Corporation**
**426 Colt Highway**
**Farmington Connecticut 06032 (US)**

(72) Inventor: **Ellwood, Henry**
**87 Leander Drive Castleton**
**Rochdale Greater Manchester (GB)**
Inventor: **Cubitt, John Anderson**
**70 Bristol Avenue**
**Ashton-Under-Lyne Greater Manchester (GB)**

(74) Representative: **Gilding, Martin John et al**
**Emhart Patents Department P.O. Box 88 Ross**
**Walk**
**Belgrave Leicester LE4 5BX (GB)**

Courier Press, Leamington Spa, England.

## Description

This invention is concerned with mixers comprising a mixer body comprising opposed end members and opposed side members extending between the end members, the end and side members defining a mixing chamber, and a pair of mixing rotors mounted for rotation about parallel or substantially parallel axes, each of the side members being of generally C-shaped cross-section such that a concave surface of each of the side members has the form of part of a cylinder, has as its axis the axis of the adjacent one of the two rotors and provides part of the wall of the mixing chamber.

Such internal mixers have been supplied for many years; one such internal mixer is supplied by the Applicant Company under the Trade Mark "Banbury". These internal mixers comprise a mixer body by which is formed a mixing chamber which is of double-cylindrical shape and provided with rotors rotatably mounted in the chamber on parallel horizontal axes one rotor being mounted coaxially with each of the cylindrical portions of the mixing chamber. The mixer body of such an internal mixer is commonly made up of several portions. The part of the body defining the mixing chamber comprises opposed end members and opposed side members extending between the end members. Each of the side members of these previously known mixers comprises a part cylindrical portion defining the double cylindrical configuration of the mixing chamber, the cylindrical portions having integral flanges at opposite end portions thereof which are bolted by bolts extending through the flanges to the end members. The cylindrical portions are further reinforced by both longitudinally and transversely extending ribs. Upper edge portions of the side members are spaced apart to form a feed opening and lower edge portions of side members are spaced apart to form a discharge opening. In the operation of such known internal mixers the discharge opening is closed during the mixing operation by a door, conveniently a pivotally mounted door. Material to be mixed is forced through the inlet opening and maintained in the mixing chamber by a ram, commonly referred to as a floating weight. An internal mixer of this type, having a pivotally mounted door is shown in, for example, U.K. Patent Specification No. 774651.

One of the various objects of the present invention is to provide an improved mixer body, of simplified construction.

This object is resolved, in accordance with the invention, in that end portions of the side members are received in complementary recesses formed in the end members with a convex, outer, surface of the side members abutting a shoulder of the end members defining the recess whereby to support the side members against outwardly directed forces arising in the mixing chamber in the operation of the mixer. A preferred internal mixer comprises stop members secured to, or integral with, the end members, upper edge portions of the side members abutting the stop members whereby to secure the side members against rotation with the upper edge portions spaced apart to provide an inlet opening, and lower edge portions likewise spaced apart providing an outlet opening.

Preferably, in the preferred internal mixer, the stop member projects from end walls of the mixing chamber (provided by the end members) slightly into the mixing chamber and has a generally V-shaped lower edge portion, the faces of which are just clear of the periphery of the rotors as they rotate. The stop member preferably comprises a lip at the apex of the V of the lower edge portion, projecting axially slightly further into the mixing chamber than the remainder of the stop member.

An internal mixer in accordance with the invention preferably comprises opposed throat plates extending between the end members, each throat plate having end portions seating against upper side portions of the stop members and having its lower edge portions seating against the upper edge portion of an adjacent one of the side members whereby to provide an inlet passage of rectangular cross-section to the mixing chamber. Conveniently the end portions of the throat plates are received in grooves formed between the stop member and a shoulder of the end member of the mixer. Conveniently the lower edge portion of each throat plate is received in a groove formed along an upper side of the upper edge portions of the side members. Preferably each side member comprises a lug upstanding outwardly of the inlet passage and secured to the adjacent throat plate.

Preferably a mixer in accordance with the invention comprises bolts mounted in the end members, each of such bolts extending through the end member and threaded into an adjacent end portion of one of the side members about mid way between the upper and lower edge portions of the side member, the bolt being disposed generally radially of the C-shape of the side member, whereby as the bolt is tightened the convex surface of the side member is drawn into firm contact with the shoulder of the end member defining the recess.

Preferably a mixer in accordance with the invention comprises a plurality of bolts extending generally axially of the side members, the bolts extending through the end members and being threaded into the end portions of the side members whereby to secure the end members to the side members.

Preferably the side members of a mixer in accordance with the invention have passages for flow of heating or cooling fluid drilled therein.

A preferred internal mixer in accordance with the invention comprises a door so constructed and arranged as to seal against the lower edge portions of the side members to close the outlet opening during a mixing operation and movable clear of the outlet opening whereby to permit discharge of material from the mixing chamber upon completion of mixing.

The side members of mixers in accordance with the invention are of uniform cross-section shape along the whole of their length (with the exception of the upstanding lug by which the side member may be secured to the throat plate where such a lug is present). The side members of mixers in accordance with the invention are thicker, and therefore stronger, than the cylindrical portions of the side members of the mixer bodies of the heretofore known internal mixers of equivalent size. The simplified construction arising from the elimination of the end flanges of the side members and of the ribs leads to less welding and to substantially simpler machining. Commonly, a hard welded layer is deposited on the cylindrical walls of the mixing chamber to provide a wear layer: the use of a thicker and stronger side member in accordance with the invention militates against distortion during the deposition of the hard welded layer.

Access to the seating of the end portions of the side members in the recesses of the end members is simple and the fit of the side members with the end members is therefore readily measured.

A further advantage of a mixer in accordance with the invention is that the mixer body is easier to dismantle than the heretofore known mixer bodies in which the side members are secured to the end members by flanges on the side members: in a mixer in accordance with the invention jacks may be interposed between the end members to jack apart the end members and thereby release the side members, this not being convenient where the side members are supplied with flanges.

In the operation of internal mixers substantial heat is commonly generated and such heat must be removed by cooling. In the side members of the heretofore known mixer bodies with strengthening ribs and flanges at the ends, the cooling which could be applied is not uniform, substantial thermal stresses being set up adjacent the flanges and reinforcing ribs. The substantially uniform section of the side members of a mixer in accordance with the invention is expected to lead to development of less extreme thermal stresses which might be expected to prolong the useful life of the mixer body.

The C-shaped section of the side members of a mixer in accordance with the invention facilitates external cleaning of the body and the elimination of ribs and flanges facilitates fitting of ancillary equipment e.g. strain gauges and of an oil injection port. A further advantage of the elimination of ribs and flanges is that the external dimensions of a side member having a particular internal curvature of the concave surface are less than the external dimensions of a side member having ribs and flanges of the heretofore known construction: this enables the side member of a mixer in accordance with the invention to be machined on smaller machine tools than a side member for a corresponding size of mixer of the heretofore known construction.

There now follows a detailed description, to be read with reference to the accompanying drawings, of an internal mixer embodying the invention. It will be realised that this internal mixer has been selected for description to illustrate the invention by way of example.

In the accompanying drawings:

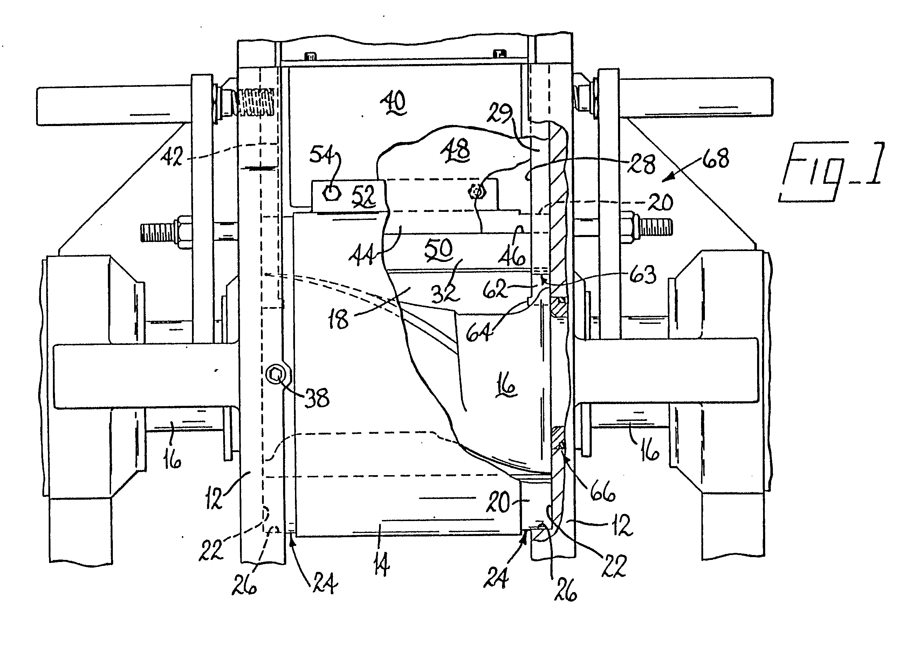

Figure 1 is a front view partly in section and with parts broken away of the illustrative internal mixer; and

Figure 2 is an exploded perspective view showing parts of the mixer body of the illustrative mixer.

The illustrative internal mixer comprises a mixer body comprising opposed end members 12 and side members 14 extending between the end members 12, the end and side members 12, 14 defining a mixing chamber of double-cylindrical cross-section. The illustrative mixer further comprises a pair of mixing rotors 16 mounted in bearings supported in the end members 12 for rotation about parallel axes in contra-rotation with the peripheries of the rotors 16 moving towards one another at an uppermost portion of the rotation.

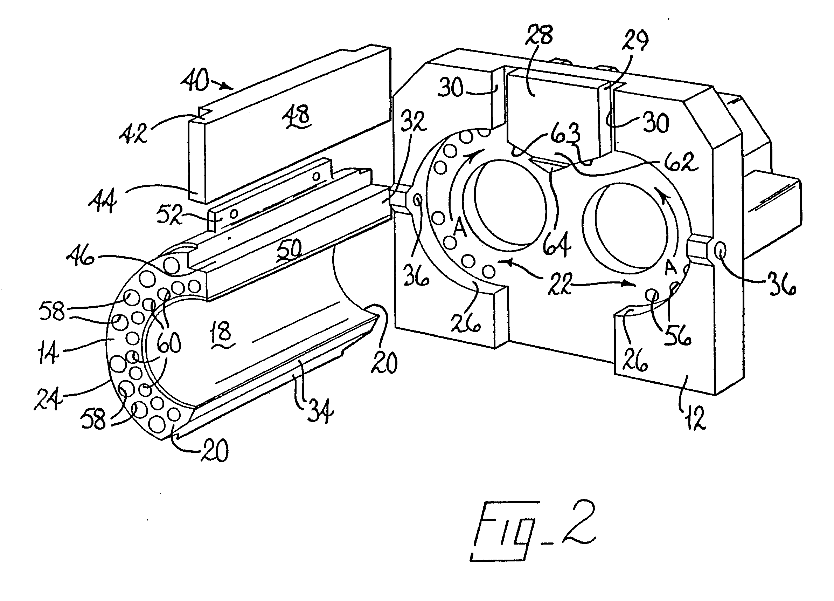

Each of the side members 14 is of generally C-shaped cross-section (see Figure 2) such that a concave surface 18 of each of the side members 14 has the form of part of a cylinder, has as its axis the axis of an adjacent one of the rotors 16 and provides part of the wall of the mixing chamber.

The construction and arrangement of the illustrative internal mixer is such that end portions 20 of the side members 14 are received in complementary recesses 22 formed in the end members 12 with a convex outer surface 24 of each end portion 20 abutting a shoulder 26 of the associated recess 22 in the adjacent one of the end members 12. The side members 14 are essentially C-shaped in cross-section and the heretofore used end flanges and reinforcing ribs are completely eliminated.

Each of the end members 12 has a stop member provided by a weight wear plate 28 secured in a recess thereof generally above and between the recesses 22, vertical faces of the weight wear plate being spaced from and parallel to vertical faces in the recess of the end member to provide grooves 30, for a purpose to be discussed hereinafter. Upper edge portions 32 of the side member 14 abut the vertical faces 29 of the wear plate 28 whereby to secure the side members 14 against rotation. The wear plates 28 space the upper edge portions 32 of the side members 14 apart to provide an inlet opening through which material to be mixed can be introduced in the operation of the mixer to the mixing chamber. Lower edge portions 34 of the side members 14 are likewise spaced apart to provide an outlet opening through which material which has been mixed can be discharged from the mixing chamber.

In assembling the mixer body of the illustrative mixer the side members 14 are located with their end portions 20 in the recesses 22. To facilitate location, bolt holes 36 are provided in the end members 12 extending perpendicularly to the axis of rotation of the rotors 16 and lying in a horizontal plane. Bolts 38 extending through the bolt holes are threaded into the adjacent end portion 20 of one of the side members 14 about midway between the upper and lower edge portions 32, 34, the bolts 38 being disposed generally radially of the C-shape of the side member 14. Thus, as the bolt 38 is tightened the end portion 20 of the side member 14 is drawn into the recess, the convex surface 24 of the side member being drawn into firm contact with the shoulder 26 of the end member 12.

The illustrative mixer further comprises a pair of opposed throat plates 40 extending between the end members 12. End portions 42 of the throat plates 40 are received in the grooves 30 thereby seating against upper side portions of the vertical faces 29 of the wear plates 28. A lower edge porton 44 of the throat plate 40, of reduced thickness, is accommodated in a groove 46 cut along an upper part of the upper edge portion 32 of the side member 14, so that the lower edge portion seats against the upper edge portion 32 of the side member 14. The wear plates 28 and the throat plates 40 thus seal together and to the side members 14 to provide an inlet passage of rectangular cross-section to the mixing chamber. An inner surface 48 of each throat plate is flush with an edge surface 50 of the upper edge portion 32 of the associated side member 14. A lug 52 is secured to and upstanding from the side member 14 outwardly of the inlet passage and is secured to the adjacent throat plate 40 by bolts 54 threaded into the throat plate.

A discharge door (not shown) so constructed and arranged as to seal against the lower edge portions 34 of the side members 14 to close the outlet opening during a mixing operation, is pivotally mounted on the end members 12 for pivotal movement about an axis parallel with the axis of rotation of the rotors 16 so that it can be moved to seal against the lower edge portions 34 of the side members to close the outlet opening and can be moved clear of the outlet opening whereby to permit discharge of material from the mixing chamber. The configuration of the discharge door and its manner of mounting, movement, and locking in place are known in the art; the construction may, for example, be similar to that shown and described in U.K. Patent Specification No. 774651 hereinbefore mentioned.

The side members 14 are conveniently a thick steel forging. The side members 14 are secured to the end members 12 by bolts (not shown) which pass through holes 56 in the end members 12 and are threaded into holes 58 in the side members 14. In the heretofore known constructions of mixer body in which the side members are secured to the end members by means of a flange on the side members bolted to the end members, the bolts used to secure the flanges to the end members were fitted closely in the holes in the end members and flanges to hold the side members against rotation under the influence of the rotary dragging action arising on rotation of the rotors during a mixing operation. In the illustrative mixer the direction of rotation of the rotors is indicated by arrows A (see Figure 2), the dragging action arising therefrom acting upon the side members 14 to urge them towards the wear plates 28 which act as stops preventing rotation of the side members; it is not, therefore, necessary that the bolts be precisely fitted in the holes 56 in the end member as they serve no function to prevent rotation of the side members but merely apply axial force securing the side members 14 to the end members 12. Passages 60 are drilled in the side members 14 extending generally parallel with the axis of the side members for flow of heating or cooling fluid during operation of the illustrative mixer.

The wear plates 28 project from end walls of the mixing chamber slightly into the mixing chamber and have a generally V-shaped lower edge portion 62, lower faces 63 of which just clear the periphery of the rotors 16 as they rotate. Each of the wear plates 28 further comprises a lip 64 at the apex of the V of the lower edge portion 62 projecting axially slightly further into the mixing chamber. The illustrative mixer comprises a floating weight (not shown) of a type commonly used in internal mixers by which material to be mixed is forced into the mixing chamber and retained therein during mixing. It has been known in the past for part of the floating weight to shear away and drop into the mixing chamber between the rotors; the lips 64 militate against this occurrence, being so disposed as to catch the weight or a portion thereof should it (or a portion of it) descend further than normal into the mixing chamber.

The illustrative mixer further comprises sealing means 66 comprising a member which is urged by a yoke arrangement 68 (for example as described in U.K. Patent Specification No. 1288503) into sealing engagement with an end portion of each of the rotors 16. The sealing means militate against escape of material from the mixing chamber round the rotor shafts. Presence of the wear plates 28 ensures that the floating weight is, axially, slightly shorter than the rotors so that downward pressure exerted by the floating weight is not applied directly to the region at which the sealing means 66 seals against the rotor 16, thereby giving improved sealing.

In addition to the features of a mixer in accordance with the invention which are applicable to the illustrative mixer and the features of the illustrative mixer referred to above, the construction of the illustrative mixer facilitates replacement of both the throat and wear plates: in heretofore known constructions of internal mixer the throat plates have commonly been integral with the side members. The reception of the end portions 20 of the side members 14 in the recesses 22 and the simplified construction of the side members leads to a mixer body the cost of which is substantially less than the cost of heretofore known bodies, in addition to the other improvements listed above.

In the operation of the illustrative mixer the shafts of the rotors 16 are rotated by a motor (not shown) through a gear arrangement (not shown) to rotate the rotors in contra rotation, in the directions indicated by the arrows A in Figure 2. The discharge door of the illustrative mixer is maintained in the closed position sealing the outlet opening. Material to be mixed is introduced into the mixing chamber through the inlet passage defined by the throat plates 40 and wear plates 28 and forced into the mixing chamber by pressure from the floating weight (not shown). Pressure is applied to the sealing means 66 by the yoke arrangement 68 to militate against leakage of material round the rotors between the rotors 16 and the end members 12. As the rotors are rotated material in the mixing chamber is mixed and the mixing action tends to drag the side members 14 in the direction indicated by the arrows A on Figure 2; rotation of the side members is, however, prevented by abutment of the edge portions 32 of the side members 14 against the vertical faces 29 of the wear plates 28. Heating or cooling fluid is passed through the passages 60 in the side members 14 to maintain the material in the mixing chamber at a suitable temperature; if necessary cooling or heating fluid may be supplied to the throat plates and end members of the illustrative mixer. Because the side members 14 are of substantially uniform cross-section along their whole length the thermal behaviour of the side members is also substantially uniform and thermal stresses set up are less severe than those generated in the side members of the heretofore known mixers. The C-shaped configuration of the side members will allow a certain amount of movement of the side members 14 in a circumferential direction. By contrast, the heretofore known side members with flanges at the end portions and reinforcing ribs were subject not only to the circumferential expansion forces generated in the cylindrical portions of the side members but also to linear thermal expansion forces arising in the end flanges and the ribs, tending to set up excessive stresses. After the material has been mixed, the discharge door is moved to the open position clear of the outlet opening and the material discharged for further treatment in known manner.

Whereas the preferred mixers in accordance with the invention are internal, batch mixers, mixers in accordance with the invention may be continuous mixers, for example of the type shown in U.K. Patent Specification No. 1039758.

**Claims**

1. A mixer comprising a mixer body comprising opposed end members (12) and opposed side members (14) extending between the end members (12) the end and side members (12, 14) defining a mixing chamber, and a pair of mixing rotors (16) mounted for rotation about parallel or substantially parallel axes, each of the side members (14) being of generally C-shaped cross-section such that a concave surface (18) of each of the side members (14) has the form of part of a cylinder, has as its axis the axis of the adjacent one of the two rotors (16) and provides part of the wall of the mixing chamber, characterised in that end portions (20) of the side members (14) are received in complementary recesses (22) formed in the end members (12) with a convex outer surface (24) of the side members (14) abutting a shoulder (26) of the end members (12) defining the recess (22) to support the side members (14) against outwardly directed forces arising in the mixing chamber in the operation of the mixer.

2. A mixer according to claim 1 wherein the axes of the rotors (16) are horizontal and side by side and the rotors (16) are mounted for contra-rotation with the peripheries of the rotors (16) moving towards one another at an uppermost portion of the rotation characterised in that upper edge portions (32) of the side members (14) are butted against stop members (28) secured to or integral with the end members (12) whereby to secure the side members (14) against rotation with the upper edge portions (32) spaced apart providing an inlet opening and lower edge portions (34) likewise spaced apart providing an outlet opening.

3. A mixer according to claim 2 characterised in that the stop member (28) projects from end walls of the mixing chamber slightly into the mixing chamber and has a generally V-shape lower edge portion (62) the faces (63) of which just clear the periphery of the rotors (16) as they rotate.

4. A mixer according to claim 3 characterised in that the stop member (28) comprises a lip (64) at the apex of the V of the lower edge portions (62), projecting axially slightly further into the mixing chamber.

5. A mixer according to any one of claims 2 to 4 comprising opposed throat plates (40) extending between the end members (12), characterised in that each has its end portions (42) seating against upper side portions (29) of the stop members (28) and has its lower edge portion (44) seating against the upper edge portion (32) of an adjacent one of the side members (14) whereby to provide an inlet passage of rectangular cross-section to the mixing chamber.

6. A mixer according to claim 5 characterised in that each side member (14) comprises a lug (52) upstanding outwardly of the inlet passage and secured to the adjacent throat plate (40).

7. A mixer according to any one of the preceding claims characterised in that bolts (38) are mounted in the end members (12), each of such bolts (38) extending through the end member (12) and threaded into an adjacent end portion (20) of one of the side members (14) about midway between the upper and lower edge portions (32, 34) the bolt (38) being disposed generally radially of the C-shape of the side member (14), whereby as the bolt (38) is tightened the convex surface (24) of the side member (14) is drawn into firm contact with the shoulder (26) of the end member (12) defining the recess (22).

8. A mixer according to any one of the preceding claims characterised in that a plurality of bolts extend generally axially of the side members (14), the bolts extending through the end members (12) and being threaded into the end portions (20) of the side members (14) whereby to secure the end member (12) to the side members (14).

**Patentansprüche**

1. Mischer mit einem Mischerkörper, welcher gegenüberliegende Endteile (12) und gegenüberliegende Seitenteile (14) umfaßt, welche sich zwischen den Endteilen (12) erstrecken, wobei die End- und Seitenteile (12, 14) eine Mischkammer begrenzen, mit einem Paar von Mischrotoren (16), die zwecks Rotation um parallele oder im wesentlichen parallele Achsen angeordnet sind, wobei jedes Seitenteil (14) einen im allgemeinen C-förmigen Querschnitt aufweist, so daß eine konkave Fläche (18) eines jeden Seitenteiles (14) die Form eines Zylinderteiles aufweist, als seine Achse die Achse des benachbarten der beiden Rotoren (16) hat und einen Teil der Wand der Mischkammer bildet, dadurch gekennzeichnet, daß die Endabschnitte (20) der Seitenteile (14) in komplementären Aussparungen (22) aufgenommen sind, die in den Endteilen (12) vorgesehen sind, wobei eine konvexe Außenfläche (24) der Seitenteile (14) an einer Schulter (26) der Endteile (12) anliegt, welche die Aussparung (22) begrenzen, um die Seitenteile (14) gegen auswärts gerichtete Kräfte zu stützen, die in der Mischkammer im Betrieb des Mischers entstehen.

2. Mischer nach Anspruch 1, wobei die Achsen der Rotoren (16) horizontal und Seite an Seite und die Rotoren (16) zur gegenläufigen Rotation angeordnet sind, wobei sich die Umfänge der Rotoren (16) in einem obersten Rotationsabschnitt zueinander bewegen, dadurch gekennzeichnet, daß die oberen Randabschnitte (32) der Seitenteile (14) gegen Anschlagglieder (28) anliegen, die an den Endteilen (12) befestigt oder damit einstückig sind, um somit die Seitenteile (14) gegen Rotation zu sichern, wobei die oberen Randabschnitte (32) voneinander im Abstand angeordnet sind, um eine Einlaßöffnung zu schaffen und die unteren Randabschnitte (34) ähnlich voneinander im Abstand angeordnet sind, um eine Auslaßöffnung zu schaffen.

3. Mischer nach Anspruch 2, dadurch gekennzeichnet, daß das Halteglied (28) sich von Endwänden der Mischkammer etwas in die Mischkammer erstreckt und einen im allgemeinen V-förmigen unteren Randabschnitt (62) aufweist, deren Flächen (63) gerade den Umfang der Rotoren (16) freigeben, wenn letztere rotieren.

4. Mischer nach Anspruch 3, dadurch gekennzeichnet, daß das Halteglied (28) eine Lippe (64) an der Spitze des V der unteren Randabschnitte (62) umfaßt, die sich axial etwas weiter in die Mischkammer erstreckt.

5. Mischer nach einem der Ansprüche 2 bis 4, wobei gegenüberliegende Platten (40) vorgesehen sind, die sich zwischen den Endteilen (12) erstrecken, dadurch gekennzeichnet, daß jede Platte Endabschnitte (42) aufweist, die gegen obere Seitenabschnitte (29) der Halteglieder (28) anliegen, wobei ihr unterer Randabschnitt (44) gegen den oberen Randabschnitt (32) eines benachbarten der Seitenteile (14) sitzt, um somit einen Einlaßdurchgang von rechteckigem Querschnitt zu der Mischkammer zu schaffen.

6. Mischer nach Anspruch 5, dadurch gekennzeichnet, daß jedes Seitenteil (14) einen Ansatz (52) umfaßt, der außerhalb des Einlaßdurchganges aufrecht steht und an der benachbarten Platte (40) befestigt ist.

7. Mischer nach einem der vorhergehenden Ansprüche, dadurch gekennzeichnet, daß Bolzen (38) in den Endteilen (12) angeordnet sind, wobei sich jeder Bolzen (38) durch das Endteil (12) erstreckt und in einem benachbarten Endabschnitt (20) eines der Seitenteile (14) ungefähr in der Mitte zwischen den oberen und unteren Randabschnitten (32, 34) geschraubt sind und daß der Bolzen (38) im allgemeinen radial im C-förmigen Teil des Seitenteils (14) angeordnet ist, so daß dann, wenn der Bolzen (38) angezogen ist, die konvexe Fläche (34) des Seitenteiles (14) in festem Kontakt mit der Schulter (26) des Endteiles (12) gezogen wird, welche die Aussparung (22) begrenzt.

8. Mischer nach einem der vorhergehenden Ansprüche, dadurch gekennzeichnet, daß eine Vielzahl von Bolzen sich im allgemeinen axial zu den Seitenteilen (14) erstrecken, wobei die Bolzen durch die Endteile (12) ragen und in die Endabschnitte (20) der Seitenteile (14) geschraubt sind, um somit das Endteil (12) an den Seitenteilen (14) zu sichern.

**Revendications**

1. Mélangeur comportant un corps de mélangeur comprenant des pièces d'extrémité opposées (12) et des pièces latérales opposées (14) disposées entre les pièces d'extrémité (12), les pièces d'extrémité et les pièces latérales (12, 14) délimitant une chambre de mélange, et deux rotors mélangeurs (16) montés pour tourner autour d'axes parallèles ou pratiquement parallèles, chacune des pièces latérales (14) ayant une section en forme générale de C de manière qu'une surface concave (18) de chacune des pièces latérales (14) présente la forme d'une partie d'un cylindre dont l'axe est l'axe de celui voisin des deux rotors (16) et constituant une partie de la paroi de la chambre de mélange, caractérisé en ce que des parties d'extrémité (20) des pièces latérales (14) sont reçues dans des logements complémentaires (22) formés dans les pièces d'extrémité (12) avec une surface extérieure convexe (24) des pièces latérales (14), s'appuyant contre un épaulement (26) des pièces d'extrémité (12), délimitant le logement (22) pour supporter les pièces latérales (14) à l'encontre des forces dirigées vers l'extérieur, développées dans la chambre de mélange pendant le fonctionnement du mélangeur.

2. Mélangeur selon la revendication 1, dans lequel les axes des rotors (16) sont horizontaux et côte à côte, les rotors (16) étant montés pour tourner dans des sens inverses avec les périphéries des rotors (16) se déplaçant l'une vers l'autre dans une partie supérieure de la rotation, caractérisé en ce que des parties de bord supérieures (32) des pièces latérales (14) s'appuient contre des pièces de butée (28) solidaires ou fixées sur les pièces d'extrémité (12) de manière à fixer les pièces latérales (14) contre toute rotation avec les parties de bord supérieures (32) espacées l'une de l'autre, formant une ouverture d'entrée et des parties de bord inférieures (34) également espacées l'une de l'autre formant une ouverture de sortie.

3. Mélangeur selon la revendication 2, caractérisé en ce que la pièce de butée (28) fait saillie sur les parois d'extrémité de la chambre de mélange, légèrement dans la chambre de mélange, et comporte une partie de bord inférieure (62) en forme générale de V dont les faces (63) sont juste dégagées de la périphérie des rotors (16) lorsqu'ils tournent.

4. Mélangeur selon la revendication 3, caractérisé en ce que la pièce de butée (28) comporte une lèvre (64) au sommet du V des parties de bord inférieures (62), faisant un peu plus saillie axialement dans la chambre de mélange.

5. Mélangeur selon l'une quelconque des revendications 2 à 4, comprenant des plaques d'étranglement (40) opposées, disposées entre les pièces d'extrémité (12), caractérisé en ce que chacune de ces parties d'extrémité (42) s'appuie contre des parties latérales supérieures (29) des pièces de butée (28) et les parties de bord inférieures (44) s'appuient contre la partie de bord supérieure (32) de l'une voisine des pièces latérales (14) de manière à former un passage d'entrée de section rectangulaire dans la chambre de mélange.

6. Mélangeur selon la revendication 5, caractérisé en ce que chaque pièce latérale (14) comporte une patte 52 qui se dresse en saillie vers l'extérieur du passage d'entrée et fixée sur la plaque d'étranglement voisine (40).

7. Mélangeur selon l'une quelconque des revendications précédentes, caractérisé en ce que des boulons (38) sont montés dans les pièces d'extrémité (12), chacun de ces boulons (38) s'étendant à travers la pièce d'extrémité (12) et étant vissé dans une partie d'extrémité voisine (20) de l'une des pièces latérales (14), à peu près à michemin entre les parties de bord supérieures et inférieures (32, 34), le boulon (38) étant disposé à peu près radialement par rapport à la forme en C des pièces latérales (14) de manière que lorsque le boulon (38) est serré, la surface convexe (24) de la pièce latérale (14) soit amenée fermement en contact avec l'épaulement (26) de la pièce d'extrémité (12) délimitant le logement (22).

8. Mélangeur selon l'une quelconque des revendications précédentes, caractérisé en ce qu'il comporte plusieurs boulons disposés axialement par rapport aux pièces latérales (14), les boulons s'étendant à travers les pièces d'extrémité (12) et étant vissés dans les parties d'extrémité (20) des pièces latérales (14) de manière à fixer la pièce d'extrémité (12) dans les pièces latérales (14).

Fig_1

0 067 603

FIg_2